Europäisches Patentamt

European Patent Office

Office européen des brevets

(19)

(11) EP 0 702 072 A1

(12) EUROPEAN PATENT APPLICATION

(43) Date of publication:
20.03.1996 Bulletin 1996/12

(51) Int Cl.6: **C09K 3/10**, C08G 75/14, C08K 3/22

(21) Application number: 95306403.7

(22) Date of filing: 13.09.1995

(84) Designated Contracting States:
DE GB NL

(30) Priority: 15.09.1994 GB 9418612

(71) Applicant: **MORTON INTERNATIONAL LIMITED**
Hounslow, Middlesex TW3 3TR (GB)

(72) Inventor: **Haraburda, Roman Zygmunt**
Stoke, Coventry (GB)

(74) Representative:
**Bankes, Stephen Charles Digby et al**
**BARON & WARREN**
**18 South End**
**Kensington**
**London W8 5BU (GB)**

(54) **One component polysulfide sealant composition**

(57)    A rapid-curing one-part polysulfide sealant composition comprises a mercaptan-terminated polymer such as liquid polysulfide, a curing agent for the polymer, preferably sodium perborate, and sodium hydroxide as a cure catalyst. The sodium hydroxide is added in the form of a non-aqueous dried paste comprising a plasticiser, a dessicant and 5 to 25% by weight of sodium hydroxide.

## Description

This invention relates to a rapid curing single component polysulfide sealant composition, and in particular to a composition of this type which does not require the use of barium oxide as a catalyst.

In preparing conventional polysulfide sealants, a mercaptan-terminated polymer, generally a liquid polysulfide of relatively low molecular weight, is reacted with a curing agent, usually an oxidising agent such as sodium perborate or a metal peroxide, to cure it to a solid state. Curing takes place in the presence of atmospheric moisture, which is excluded from the composition prior to use. The curing agent generally requires a catalyst, and for this purpose barium oxide has usually been used.

The use of barium oxide gives rise to problems of toxicity, and the amount used has to be kept to a minimum. To avoid the need for a warning label in accordance with European Union regulations, barium oxide catalysed systems must contain less than 1% of barium, and this maximum is likely to reduce to 0.5% in the near future. Using such relatively small amounts of barium oxide as the catalyst would have the disadvantage of increased cure times. There is therefore a need for a replacement for barium oxide catalysts, for shorter cure times as well as for easier handling, disposal and general environmental considerations.

The present inventor has now developed a rapid curing, barium free, single component polysulfide sealant composition using sodium hydroxide in place of barium oxide as the cure catalyst, to produce sealant systems with shorter tack free times and faster through cure rate.

According to the present invention, sodium hydroxide is incorporated into a polysulfide sealant composition in the form of a non-aqueous dried paste comprising a plasticiser, a desiccant and 5-25 weight percent of sodium hydroxide. The preferred sodium hydroxide content in the paste is in the range from 10-20 weight percent, most preferably about 12 weight percent. The desiccant is preferably also present in an amount of 5 to 25 weight % and the paste preferably contains an approximately equal amount of desiccant. This paste can then be added to the polysulfide composition, preferably in an amount such as to give an overall NaOH content in the composition of 0.1 to 1.5 phr, more preferably 0.5 to 1.2 phr and most preferably about 1 phr. The total sodium hydroxide content of the overall LP composition is preferably in the region of 0.1 to 0.5 weight percent, more preferably 0.2 to 0.3 weight percent. Such a sodium hydroxide content would not necessitate labelling of the composition as hazardous according to European Union regulations.

In order to give a stable non-aqueous paste, the plasticiser used should be one which is not saponified by sodium hydroxide. Phthalate ester plasticisers should be avoided. Suitable plasticisers include Monsanto Flexaryl 9020 (terphenyl) and Morton TP90B (polyether).

The preferred curing agent is a perborate such as sodium perborate. Metal peroxides may also be used. The curing agent is preferably added in an amount of 1 to 5 phr.

The preferred liquid polysulfide polymers are those having a molecular weight of 1000 to 8000, a viscosity of 1 to 200 Pas and a degree of cross linking of 2.0% or less. The preferred polymers are those prepared by Morton International , Inc. and know as LP-2C, LP-32C etc.

The invention will be further illustrated by means of the following example.

<u>Example</u>

Non-aqueous sodium hydroxide pastes were produced by a two stage method wherein sodium hydroxide pellets were first blended with a molecular sieve desiccant in a Kenwood coffee grinder. The resulting mixture was then blended with a terphenyl plasticiser in an Eiger Torrance 250 mini motor mill.

Initial sodium hydroxide paste formulations with high sodium hydroxide content (31.5%) and a low dessicant level (7.87%) were unsatisfactory in processing and gave poor moisture stability. The pastes were observed to experience a rapid increase in thixotropy during the milling process, which prevented the product from being pumped through the mill. In addition, "dew drops" were seen to appear on the surface of the paste with time.

Acceptable results with respect to processing and moisture stability were achieved with a 25% NaOH content. The best results were however obtained with a 12% NaOH content and the same level of desiccant. This mixture had superior processing properties and good moisture stability.

To make the 12% NaOH paste, an initial mixture designated as AQ207/1, was made up as follows,

|  | AQ207/1 |
| --- | --- |
|  | (pbw) |
| NaOH (pellets) | 100 |
| Molecular Sieve powder 3Å | 100 |
|  | $\overline{200}$ |

The NaOH pellets were mixed with the molecular sieve powder and ground to a fine powder in the Kenwood coffee grinder. The AQ207/1 powder was stored in a tin previously purged with dry nitrogen. This powder was then blended with the Flexaryl 9020 terphenyl plasticiser as follows to make a paste designated as AQ207/2:

|  | AQ207/2 |
| --- | --- |
|  | (pbw) |
| AQ207/1 | 157.5 |
| Flexaryl 9020 | 500 |
|  | 657.5 |

Blending was carried out as follows:

i) The pearl mill was loaded with a 80% bead charge.
The charge consisted of 2mm glass beads.

ii) A slurry of AQ207/1 in Flexaryl 9020 was prepared.

iii) The slurry was slowly pumped into the chamber.

iv) The slurry was processed using 4 regimes, all carried out under dry nitrogen:

    a) 10 mins at 200-250 rpm

    b) 15 mins at 300 rpm

    c) 10 mins at 350 rpm

    d) 5 mins at 400 rpm

The temperature at the end of the processing period was 38°C.
The particle size was estimated at $1.2\mu m$ using a Hegman gauge.
The sodium hydroxide paste AQ207/2 is incorporated into a one component polysulfide sealant by direct addition, under dry nitrogen in a vacuum mixer, during the final sealant processing stage.
The sealant composition contained, in addition to the liquid polysulfide, a curative comprising sodium perborate monohydrate which was dispersed in an oil medium and added in the form of a paste. The resultant sealant composition, designated AQ223, also included the usual fillers, adhesion promoters and additional plasticisers.
The formulation and mixing cycle for AQ223 are as follows:

Add to the vacuum mixer

| | parts by weight |
|---|---|
| Liquid Polysulfide LP-2C, M.wt. 4000 | 100 |
| Santicizer S261 (octyl benzyl phthalate plasticizer) | 26 |
| Ground $CaCO_3$, Polycarb | 100 |
| Precipitated $CaCO_3$, Winnofil SPT (stearate coated) | 45 |
| Molecular Sieve 3Å powder | 4 |

   i)    Mix 5 minutes at very low shear no vacuum

  ii)    Mix 10 minutes at medium shear with vacuum

iii)    Add

| | |
|---|---|
| Winnofil SPT | 36 |
| Thixotropic agent Thixatrol ST (part-hydrogenated castor oil) | 5 |
| | |
| Pigment $TiO_2$, RCR2 (Rutile) | 20 |
| Santicizer S261 | 20 |
| Plasticizer, Morton TO-90B (5, 8, 11, 13, 16, 19-hexaoxatricosane) | 5 |

  iv)    Mix 10-15 minutes very low shear - no vacuum

   v)    Mix 45-50 minutes medium high shear with vacuum

  vi)    Add

| | parts by weight |
|---|---|
| TP-90B | 7 |
| Adhesion promoter Silane A187 (epoxy-terminated) | 1 |

  vii)    Mix 10-15 minutes medium shear with vacuum

           Allow 1 hour to cool

viii)    Add

| | |
|---|---|
| 30% sodium perborate in plasticizer blend ($\equiv$ 2.75 phr) | 9.17 |
| NaOH 12% - AQ207/1 ($\equiv$ 1 phr) | 8.33 |

  ix)    Mix for 10-15 minutes at medium shear plus vacuum

   x)    Package in cartridges

The curative paste of the present invention gave substantially reduced tack free times as well as reduced through cure times. The tack free times and skin development given by the paste are compared in the following table with those of four other polysulfide sealant compositions using barium oxide.

The use of the sodium hydroxide paste makes it possible to produce 1 part polysulfide sealant with cure rates comparable to those of polyurethane and silicone sealants. Improved cure rates can be achieved even at relative hu-

midities less than 50%.

| Sealant (Catalyst System) | Tack Free Time (23°C/65%RH) | Skin Development at 23°C/65%RH (mm) | | | | | |
|---|---|---|---|---|---|---|---|
| | | 1 Day | 6 Day | 13 Day | 14 Day | 21 Day | 22 Day |
| Saba mono seal (BaO) | 60 mins | 1.70 | 5.00 | 7.30 | - | - | 8.40 |
| Arbokol 1000 (BaO) | 50 mins | 1.70 | 3.80 | 4.60 | - | - | 7.30 |
| Monopol (BaO) | 2hrs 20mins | 1.50 | 4.30 | 7.30 | - | - | 9.40 |
| Siroflex (BaO) | 2hrs 30mins | 1.88 | 4.80 | - | 7.52 | 9.82 | - |
| AQ223 (NaOH) | 35 mins | 2.40 | 6.27 | - | 10.45 | 14.00 | complete |

**Claims**

1. A one-component liquid polysulfide sealant composition comprising a mercaptan-terminated polymer, a curing agent for the polymer and a cure catalyst, characterized in that the cure catalyst comprises sodium hydroxide, added to the composition in a non-aqueous dried paste comprising a plasticiser, a dessicant and 5 to 25% by weight of sodium hydroxide.

2. A sealant composition according to claim 1 wherein said paste comprises 10 to 20 weight % of sodium hydroxide.

3. A sealant composition according to claim 1 or claim 2 wherein said paste comprises approximately equal quantities of sodium hydroxide and dessicant.

4. A sealant composition according to any preceding claim which has a sodium hydroxide content of 0.1 to 1.5 weight parts per hundred weight parts of resin (phr).

5. A sealant composition according to claim 4 wherein the sodium hydroxide content is 0.5 to 1.2 phr.

6. A sealant composition according to any preceding claim which has a total sodium hydroxide content of 0.1 to 0.5 weight %.

7. A sealant composition according to any preceding claim wherein the plasticiser is selected from terphenyl and polyethers.

8. A sealant composition according to any preceding claim wherein the curing agent is selected from perborates and metal hydroxides.

9. A sealant composition according to claim 8 wherein the curing agent is sodium perborate.

10. A sealant composition according to any preceding claim wherein the mercaptan-terminated polymer is a liquid polysulfide.

11. A method of making a one-component liquid polysulfide sealant composition comprising a mercaptan-terminated polymer, a curing agent for said polymer and a cure catalyst, which comprises the step of mixing said mercaptan-terminated polymer with said curing agent and with a non-aqueous dried paste comprising a plasticizer, a desiccant and, as said catalyst, 5 to 25% by weight based on the total paste, of sodium hydroxide.

12. A catalyst composition for assisting the cure of a mercaptan-terminated polymer with an oxidising agent, in the form of a non-aqueous dried paste comprising a plasticizer, a desiccant and 5 to 25% by weight of sodium hydroxide.

European Patent
Office

**EUROPEAN SEARCH REPORT**

Application Number

EP 95 30 6403

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 552 550 (MORTON INTERNATIONAL LIMITED) <br> * page 2, line 43 - page 3, line 10 * <br> * page 4, line 1 - line 6 * <br> * claims 1,5,6; example 1 * <br> --- | 1,8-10, 12 | C09K3/10 <br> C08G75/14 <br> C08K3/22 |
| A | EP-A-0 429 180 (PRODUCTS RESEARCH AND CHEMICAL CORPORATION) <br> * page 2, line 1 - line 9 * <br> * page 4, line 23 - line 33 * <br> --- | 1,2,4-6, 8,10-12 | |
| A | EP-A-0 348 600 (RÜTGERSWERKE AKTIENGESELLSCHAFT) <br> * page 2, line 1 - line 5 * <br> * page 2, line 37 - page 3, line 32 * <br> * claim 1; example * <br> --- | 1,7-12 | |
| A | EP-A-0 332 754 (RÜTGERSWERKE) <br> * the whole document * <br> --- | 1,8-12 | |
| A | EP-A-0 194 361 (RÜTGERSWERKE AKTIENGESELLSCHAFT) <br> * the whole document * <br> --- | 1,8-12 | TECHNICAL FIELDS SEARCHED (Int.Cl.6) |
| A | EP-A-0 079 529 (RIEDEL-DE HAEN) <br> * page 2, line 27 - line 31 * <br> * claims 1,4 * <br> --- | 1,12 | C09K <br> C08G <br> C08K |
| A | DATABASE WPI <br> Week 9042 <br> Derwent Publications Ltd., London, GB; <br> AN 90-317968 <br> & JP-A-02 228 388 (YOKOHAMA RUBBER) <br> * abstract * <br> ----- | 1,8,9 | |

The present search report has been drawn up for all claims

| Place of search | Date of completion of the search | Examiner |
|---|---|---|
| THE HAGUE | 15 December 1995 | Puetz, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P04C01)